# EUROPEAN PATENT APPLICATION

(11) **EP 2 865 883 A2**
(43) Date of publication of application: **29.04.2015**
(21) Application number: 14189849.4
(22) Date of filing: 22.10.2014
(51) Int. Cl.: F02P 19/02

(54) **Glow plug control apparatus and glow plug control method**

(30) Priority: 22.10.2013 JP 2013219385; 23.09.2014 JP 2014193190
(71) Applicant: NGK Spark Plug Co., Ltd., Nagoya-shi, Aichi 467-8525 (JP)
(72) Inventor: Nakamura, Yoshihiro, Nagoya Aichi (JP); Matsui, Masayoshi, Nagoya Aichi (JP)
(74) Representative: Grünecker Patent- und Rechtsanwälte PartG mbB

(57) **Abstract**

A glow plug control apparatus and a glow plug control method using the same are provided. The glow plug has a housing having an axial hole, a heater member arranged in the axial hole and heated by a current conduction, and a seal member adapted to connect the heater member between the heater member and the housing in a relatively movable manner in the axial direction in the axial hole of the housing and in an elastic manner and prevent an entry of a combustion gas into the gap between the housing and the heater member. The glow plug control apparatus has deposit accumulation time current conduction means for conducting a current to the heater member so that the seal member is heated to higher than or equal to 200 degrees centigrade in a driving state where deposit is accumulated in the axial hole.

## Description

### BACKGROUND

### 1. Technical Field

The present invention relates to a glow plug current conduction control apparatus adapted to perform current conduction to a heater member provided to a glow plug having a pressure sensing function for sensing a cylinder internal pressure of an internal combustion engine, and a method for controlling the current conduction to the glow plug having the pressure sensing function.

### 2. Related Art

As glow plugs adapted to assist the starting of an internal combustion engine such as a diesel engine, there have been known glow plugs also having a pressure sensing function for sensing a cylinder internal pressure of the internal combustion engine (see, for example, Japanese Patent Application Laid-open No. 2012-177483). In this glow plug, a heater part (a heater member) is separated from a housing. Further, the heater part is elastically connected to the housing via a connection member (a seal member). Furthermore, the heater part is arranged in the housing so that the heater part is able to move along the axial direction. The connection member prevents the combustion gas of the internal combustion engine from entering the base end side of the connection member along the axial direction. The displacement of the heater part along the axial direction caused by the change in the cylinder internal pressure is then transferred to a pressure sensor. In this way, the cylinder internal pressure of the internal combustion engine is sensed. The pressure sensor has, for example, an annular metal diaphragm and a piezo resistor element connected to the upper surface of the metal diaphragm. The piezo resistor element senses the degree of the distortion of the metal diaphragm that is caused as the position of the heater part changes along the axial direction due to the change in the cylinder internal pressure. Thereby, the cylinder internal pressure is sensed.

By the way, when the fuel is combusted by the operation of the internal combustion engine, soot may be generated. The glow plug is protruded inside a combustion chamber. Therefore, the generated soot may enter the housing from the front end of the housing of the glow plug through a gap between the housing and the heater part. As a result, the soot may be accumulated as deposit on the inner wall of the housing, the outer circumference of the heater part, the connection member, and so on. This causes a reduction in the mobility of the heater part. Furthermore, the gap between the housing and the heater part may be narrower or closed, which may result in a reduction in the cylinder internal pressure detected by the pressure sensor. Then, there has been proposed a technique for controlling the accumulation of the deposit onto the glow plug side by utilizing the thermal migration caused by the thermal gradient generated between the glow plug (the heater member) and the engine head (see Japanese Patent Application Laid-open No. 2011-74809).

In the above technique in Japanese Patent Application Laid-open No. 2011-74809, however, there may be a case where the accumulation of the deposit in the gap between the housing and the heater member is not properly prevented when a driving state where a large amount of soot is generated continues.

The present invention has been achieved in view of the above problems. The present invention provides a glow plug control apparatus that is able to properly prevent the attachment of the deposit to the inside of the housing of the glow plug having the pressure sensing function for sensing the cylinder internal pressure of the internal combustion engine. Further, the present invention provides a glow plug control method that allows for the proper prevention of the attachment of the deposit to the inside of the housing of the glow plug having the pressure sensing function.

### SUMMARY

An embodiment of the present invention to solve the above problems is a glow plug control apparatus adapted to perform a current conduction control of a glow plug having a pressure sensing function for detecting a cylinder internal pressure of an internal combustion engine. The glow plug has: a cylindrical housing having an axial hole extending in an axial direction; a straight bar-shaped heater member whose at least front end part protrudes out of an front end of the housing, the heater member having an annular gap between the heater member and the housing, arranged in the axial hole so as to be able to move relatively with respect to the housing in the axial direction, and adapted to heat by a current conduction; and a seal member arranged in the axial hole of the housing, adapted to connect the heater member to the housing in a relatively movable manner in the axial direction and in an elastic manner, and adapted to prevent, in an airtight manner, an entry of a combustion gas generated in an combustion chamber of the internal combustion engine into the gap between the housing and the heater member toward an rear end side in the axial direction. The glow plug control apparatus includes: starting time current conduction means for conducting a current to the heater member of the glow plug around a time of a starting of the internal combustion engine; and deposit accumulation time current conduction means for conducting a current to the heater member of the glow plug so that the seal member is heated to higher than or equal to 200 degrees centigrade at time in a driving state where deposit is accumulated in the axial hole of the housing other than the time around the starting.

The above glow plug control apparatus has the deposit accumulation time current conduction means besides the starting time current conduction means for conducting a current to the heater member around the time of the starting of the internal combustion engine. The deposit accumulation time current conduction means conducts the current to the heater member in a driving state where the deposit is accumulated in the axial hole of the housing due to the soot generated in the combustion chamber and, thereby, the seal member is heated to higher than or equal to 200 degrees centigrade. In such the way, the seal member together is heated to the high temperature, so that, while the soot generated in the combustion chamber enters the part between the glow hole of the engine head and the heater member of the glow plug and further enters the gap between the housing and the heater member, the soot is decomposed by the heat and gasified, or reformed to be fine particles that are unlikely to attach. Therefore, it can properly prevent the deposit by the soot from being accumulated between the glow hole of the engine head and the heater member of the glow plug. Besides, it can also properly prevent the deposit by the soot from being accumulated on the inner surface of the housing, the outer circumference surface of the heater member, and the front end side surface of the seal member located in the front end side of the seal member in the gap between the housing and heater member. In such the way, the above glow plug control apparatus is able to maintain the pressure sensing function of the glow plug and properly perform the sensing of the cylinder internal pressure.

It is noted that, in the "driving state where the deposit is accumulated in the axial hole of the housing", without the current conduction by the deposit accumulation time current conduction means, the deposit would be accumulated in respective parts (the housing, the heater member, the seal member) in the axial hole of the housing. The determination as to whether or not it is in the "driving state where the deposit is accumulated in the axial hole of the housing" can be made by calculating and processing the data of the accelerator opening (an accelerator opening sensor), the engine revolution (a revolving speed sensor), the engine cooling water temperature (a water temperature sensor), the oxygen concentration in the exhausted air (an oxygen sensor, air/fuel ratio sensor), and so on that are obtained by using the glow plug control apparatus. Further, it may be configured to receive the determination result as to whether or not it is in the "driving state where the deposit is accumulated in the axial hole of the housing" determined by a device such as an ECU and the like for monitoring the driving state of the internal combustion engine.

Moreover, in the glow plug control apparatus, the deposit accumulation time current conduction means may conduct a current to the heater member of the glow plug so that the seal member is heated to higher than or equal to 250 degrees centigrade.

In this apparatus, the seal member is heated to higher than or equal to 250 degrees centigrade. In such the way, the seal member together is heated to the high temperature, so that the deposit due to the soot is further unlikely to attach. Therefore, it further ensures to maintain the pressure sensing function of the glow plug and properly perform the sensing of the cylinder internal pressure.

Further, the glow plug control apparatus may be the glow plug control apparatus according to any of the above descriptions, in which the driving state where the deposit is accumulated in the axial hole includes a driving state where the internal combustion engine is driven so that an exhaust gas cleaning catalyst or a diesel particle filter is re-activated, or a driving state where the internal combustion engine is driven with the maximum fuel supply amount.

In order to re-activate the catalyst and the filter as described above, a large amount of fuel is injected to exhaust the exhaust gas containing the unburned fuel. This unburned fuel is then combusted near the catalyst and the filter to increase the exhaust gas temperature. Thereby, the soot attached to the catalyst and the filter is combusted. Thus, the exhaust gas containing a large amount of remaining unburned fuel particles and soot is generated in the combustion chamber of the internal combustion engine. The inside of the axial hole of the glow plug is therefore in the state where the deposit is accumulated. Further, because of a strong depression of the accelerator pedal for the heavy load in a case where the vehicle climbs the steep and the like, there may be a driving state where the internal combustion engine is driven in the state where the accelerator opening is the maximum and the fuel supply amount is also the maximum. Also in such the driving state, the exhaust gas having much remaining soot is generated in the combustion chamber of the internal combustion engine.

Therefore, in the case of these driving states, conducting the current to the heater member by the deposit accumulation time current conduction means can properly prevent the deposit from being accumulated on respective parts.

Another embodiment is a glow plug control method for performing a current conduction control of a glow plug having a pressure sensing function for detecting a cylinder internal pressure of an internal combustion engine. The glow plug has: a cylindrical housing having an axial hole extending in an axial direction; a straight bar-shaped heater member whose at least front end part protrudes out of an front end of the housing, the heater member having an annular gap between the heater member and the housing, arranged in the axial hole so as to be able to move relatively with respect to the housing in the axial direction, and adapted to heat by a current conduction; and a seal member arranged in the axial hole of the housing, adapted to connect the heater member to the housing in a relatively movable manner in the axial direction and in an elastic manner, and adapted to prevent, in an airtight manner, an entry of a combustion gas generated in an combustion chamber of the internal combustion engine into the gap between the housing and the heater member toward an rear end side in the axial direction. The glow plug control apparatus includes: a starting time current conduction step for conducting a current to the heater member of the glow plug around a time of a starting of the internal combustion engine; and a deposit accumulation time current conduction step for conducting a current to the heater member of the glow plug so that the seal member is heated to higher than or equal to 200 degrees centigrade at time in a driving state where deposit is accumulated in the axial hole of the housing other than the time around the starting.

The above glow plug control method has the deposit accumulation time current conduction step besides the starting time current conduction step for conducting a current to the heater member around the time of the starting of the internal combustion engine. The deposit accumulation time current conduction step conducts the current to the heater member in a driving state where the deposit is accumulated in the axial hole of the housing due to the soot generated in the combustion chamber and, thereby, the seal member is heated to higher than or equal to 200 degrees centigrade. In such the way, the seal member together is heated to the high temperature, so that, while the soot generated in the combustion chamber enters the part between the glow hole and the heater member and further enters the gap between the housing and the heater member, the soot is decomposed by the heat and gasified, or reformed to be fine particles that are unlikely to attach. Therefore, it can properly prevent the deposit by the soot from being accumulated between the glow hole of the engine head and the heater member of the glow plug. Besides, it can also properly prevent the deposit by the soot from being accumulated on the inner surface of the housing, the outer circumference surface of the heater member, and the front end side surface of the seal member located in the front end side of the seal member in the gap between the housing and heater member. In such the way, the above glow plug control method is able to maintain the pressure sensing function of the glow plug and properly perform the sensing of the cylinder internal pressure.

Moreover, in the deposit accumulation time current conduction step in the glow plug control method, a current to the heater member of the glow plug may be conducted so that the seal member is heated to higher than or equal to 250 degrees centigrade.

In this control method, the seal member is heated to higher than or equal to 250 degrees centigrade. In such the way, the seal member together is heated to the high temperature, so that the deposit due to the soot is further unlikely to attach. Therefore, it further ensures to maintain the pressure sensing function of the glow plug and properly perform the sensing of the cylinder internal pressure.

Further, the glow plug control method may be the glow plug control method according to any of the above descriptions, in which the driving state where the deposit is accumulated in the axial hole includes a driving state where the internal combustion engine is driven so that an exhaust gas cleaning catalyst or a diesel particle filter is re-activated, or a driving state where the internal combustion engine is driven with the maximum fuel supply amount.

When the catalyst and the filter are re-activated and when a large amount of fuel is injected as described above, the exhaust gas having a large amount of remaining unburned fuel particles and soot is generated in the combustion chamber of the internal combustion engine. Thus, the inside of the axial hole of the glow plug is in the state where the deposit is accumulated.

Therefore, in the case of these driving states, conducting the current to the heater member by the deposit accumulation time current conduction step can properly prevent the deposit from being accumulated on respective parts.

### BRIEF DESCRIPTION OF DRAWINGS

FIG. 1 is a schematic view illustrating a configuration of an engine control system including an engine, a glow plug, an ECU, a glow controller, and an engine control apparatus;
FIG. 2 is a partial sectional view illustrating a configuration of the glow plug;
FIG. 3 is an exploded view illustrating a form of an engine head and a front end part of the glow plug mounted to the engine head; and
FIG. 4 is a flowchart illustrating a glow plug current conduction control process performed by a microprocessor of an ECU 1 of an embodiment.

### DETAILED DESCRIPTION OF THE EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Embodiments of the present invention will be described by referring to the drawings. It is noted that the object controlled by a glow plug control system SYS of the present embodiment is a diesel engine (hereafter, also referred to as "EG") having a common-rail fuel injection apparatus.

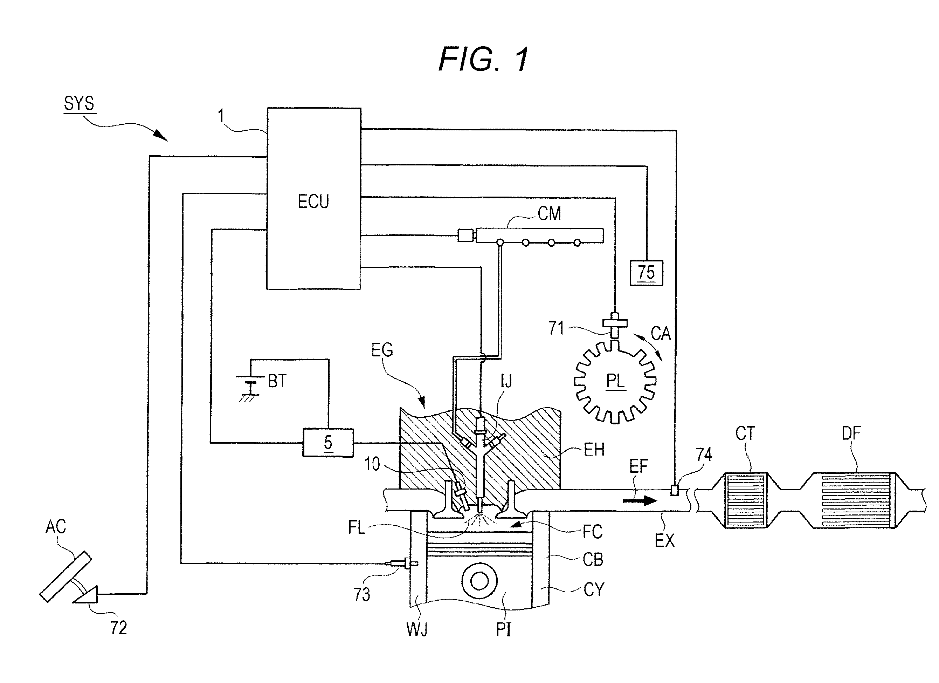

Firstly, the general configuration of the entire engine control system SYS of the present embodiment will be described. FIG. 1 is a view illustrating the general configuration of the engine control system SYS including an ECU 1 that is an engine control apparatus of the present embodiment and a glow controller 5. The engine EG that is the object controlled by this system is an inline four-cylinder engine mounted to a four-wheeled vehicle (not shown). It is noted that one cylinder CY only is depicted in FIG. 1 for the purpose of illustration. In the present specification, the ECU 1 and the like will be described in focusing on this one cylinder CY.

The cylinder CY of the engine EG is formed of a cylinder block CB and an engine head EH. The cylinder block CB is provided with a cooling water path (a water jacket) WJ for circulating a cooling water, and a water temperature sensor 73 for detecting the temperature of the cooling water (the cooling water temperature) in the cooling water path WJ. The engine EG (the cylinder block CB and the engine head EH) is cooled by this cooling water.

A piston PI is accommodated in the cylinder CY. A crank shaft (out of the figure) that is an output shaft of the engine EG is rotated by the reciprocating motion of the piston PI. It is noted that the crank shaft is provided with a known pulsar PL adapted to rotate itself together with the crank shaft. A plurality of teeth is formed on the outer circumference of the pulsar PL. The outer circumference of the pulsar PL is provided with a known crank angle sensor 71. The crank angle sensor 71 detects the tooth of the pulsar PL to output a crank angle signal indicating a crank angle CA.

In a combustion chamber FC in the cylinder CY of the engine EG, a high pressure fuel transferred from a not-shown high pressure pump is stored in a common rail (a pressure accumulation pipe) CM. An injector IJ is fixedly provided to the engine head EH of the engine EG. The injector IJ is an electromagnetic actuation type fuel injection valve. The high pressure fuel (the light oil whose pressure is 1000 atm or higher, for example) supplied from the common rail (the pressure accumulation pipe) CM is directly injected and supplied into the combustion chamber FC by the injector IJ. Specifically, a required amount of the fuel FL is injected and supplied at a proper timing to each cylinder CY by the valve opening actuation of the injector IJ. The supply amount of the fuel FL is determined by the engine control apparatus 1 depending on the opening of the accelerator pedal AC, the load on the engine EG, and the like. Therefore, the maximized opening of the accelerator pedal AC allows the maximum supply amount of the fuel FL to be injected and supplied when the engine EG is driven under a heavy load. It is noted that the exhaust gas EF from the engine EG is discharged through the exhaust pipe EX. On the way of the exhaust pipe EX, an oxidation catalyst CT for cleaning the exhaust gas EF and a diesel particle filter DF are arranged. This allows for the cleaning of the exhaust gas EF and the removal of the soot particles.

A glow plug with a pressure sensor (hereafter, also referred to as glow plug) 10 is fixedly provided to the engine head EH such that the front end portion of the glow plug protrudes in the combustion chamber FC in order to assist the engine starting. Around the time of the starting of the engine EG, a current is conducted to a heat coil 16A and a control coil 16B embedded in a heater member 14 of the glow plug 10, so that the glow plug 10 raises the temperature in the combustion chamber or raises the temperature of the surface of the heater member 14. This causes a rapid rise in the temperature of the collided fuel, which results in the improved ignition property of the fuel. Further, the glow plug 10 has a pressure sensor assembly 20 (a pressure sensing function) adapted to detect a cylinder internal pressure that is the pressure within the combustion chamber FC.

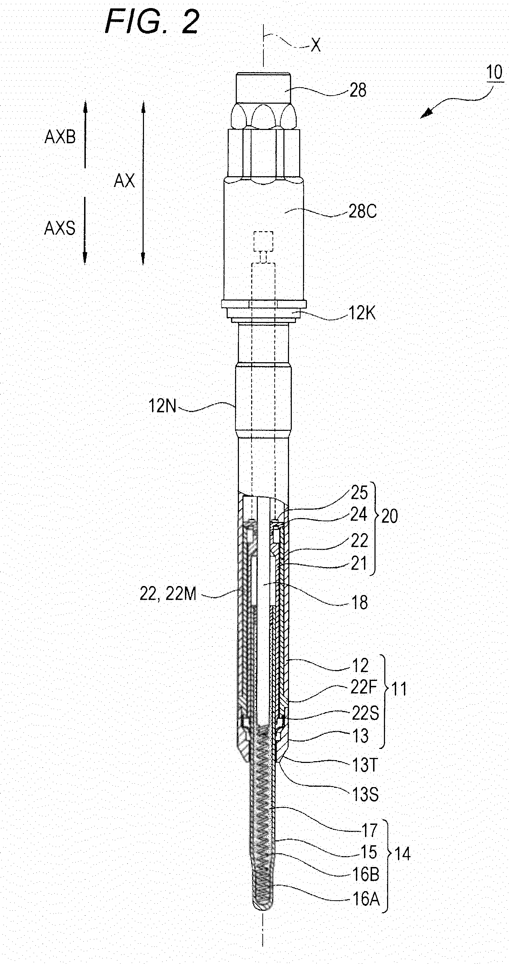

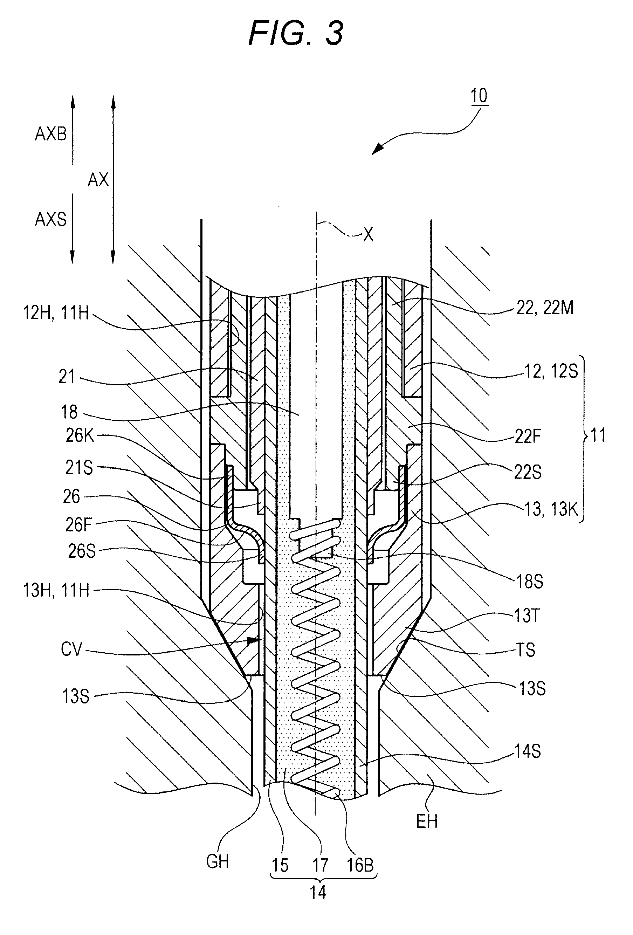

The structure of the glow plug 10 will be described by referring to FIG. 2 and FIG. 3. FIG. 2 is a partial sectional view of the glow plug 10. FIG. 3 is an exploded sectional view illustrating the state where the glow plug 10 is mounted to the engine head EH. FIG. 3 also illustrates the form of the front end portion of the glow plug. In the followings, in FIG. 2 and FIG. 3, the upper part is defined as a base end side AXB of an axial direction AX and the lower part is defined as a front end side AXS of the axial direction AX for the purpose of illustration. As illustrated in FIG. 2, the glow plug 10 includes a housing 11, the heater member 14, the pressure sensor assembly 20, a center shaft 18, a terminal assembly 28, and so on.

The cylindrical housing 11 has an axial hole 11H extending in the axial direction AX along the axial line X. The housing 11 includes a cylindrical metal shell 12 located in the base end side AXB, a cylindrical cap member 13 located in the front end side AXS, and a flange part 22F and a front end part 22S of an inner cylinder 22. The inner cylinder 22 forms a part of the pressure sensor assembly 20 described later. Further, each of the metal shell 12, the cap member 13, the inner cylinder 22, the flange part 22F, and the front end part 22S is made of a metal material. Of the metal shell 12, the outer circumference surface of the base end side AXB of the axial direction AX is formed with external threads 12N used for a mounting.

The pressure sensor assembly 20 includes the inner cylinder 22, a transfer sleeve 21, a sensor main body 24, a membrane 26, and so on. A main body part 22M of the inner cylinder 22 is shaped in substantially a cylinder. The main body part 22M is arranged in the axial hole 12H of the metal shell 12 in a concentric manner with the axial hole 12H. The flange part 22F is formed in the front end side AXS of the axial direction AX of the main body part 22M. The flange part 22F protrudes outward in the radial direction and shaped in a flange having the same outer diameter as the metal shell 12. The flange part 22F is welded to a metal shell front end part 12S of the metal shell 12. It is noted that the inner cylinder 22 is coupled to the sensor main body 24 in the base end side.

The transfer sleeve 21 of the pressure sensor assembly 20 is shaped in substantially a cylinder. The transfer sleeve 21 is fitted onto a sheath tube 15 of the heater member 14, and extends up to the part protruding from the sheath tube 15 of the center shaft 18. The front end part 21S of the transfer sleeve 21 is welded to the sheath tube 15 and thus the transfer sleeve 21 is integrated with the heater member 14. In this way, the transfer sleeve 21 is accommodated in the metal shell 12 and the inner cylinder 22. Further, the base end side of the transfer sleeve 21 is coupled to the sensor main body 24. Therefore, the displacement of the heater member 14 along the axial direction AX is transferred to the sensor main body 24 by the transfer sleeve 21. The sensor main body 24 includes a pressure sensing element 25 made of a piezo resistor element. Further, the sensor main body 24 is coupled to the inner cylinder 22 and the transfer sleeve 21. The sensor main body 24 senses the cylinder internal pressure by sensing the displacement of the heater member 14 along the axial direction AX transferred by the transfer sleeve 21.

Of the cap member 13, a cap base end part 13K located in the base end side AXB of the axial direction AX is formed in a thin cylinder. The cap base end part 13K is fitted onto the front end part 22S of the inner cylinder 22 and welded to the flange part 22F of the inner cylinder 22.

The membrane 26 is accommodated inside the cap base end part 13K. The membrane 26 connects the front end part 22S of the inner cylinder 22 to the sheath tube 15 of the heater member 14. That is, firstly, the heater member 14, the center shaft 18, and the pressure sensor assembly 20 are accommodated in the metal shell 12 and the inner cylinder 22. Furthermore, the membrane 26 is connected to the front end part 22S of the inner cylinder 22 and the sheath tube 15 of the heater member 14 by the welding. Then, the cap member 13 is fitted onto the membrane 26 and the heater member 14 and welded to the flange part 22F of the inner cylinder 22.

Further, the front end side AXS of the cap member 13 is formed with a taper part 13T shaped in a taper having decreasing diameter toward a front end 13S. When the glow plug 10 is mounted in a glow hole GH of the engine head EH of the engine EG, the taper part 13T tightly contacts with a taper seat surface TS of the glow hole GH so as to ensure airtightness between the glow plug 10 and the combustion chamber FC.

As described above, the metal shell 12, the flange part 22F and the front end part 22S of the inner cylinder 22, and the cap member 13 integrally form the housing 11.

It is noted that, of the gap between the axial hole 13H of the cap member 13 and the heater member 14 (the sheath tube 15), the front end side AXS of the membrane 26 forms a communication gap CV communicating to the combustion chamber FC of the engine EG.

The heater member 14 is a known sheath heater. The heater member 14 has the cylindrical sheath tube 15 whose front end is closed and in which the heat coil 16A and the control coil 16B are arranged in series and further an insulating powder 17 is filled. A part of the front end side AXS of the center shaft 18 described later is inserted in the sheath tube 15. A center shaft front end part 18S is electrically conducted to the control coil 16B in the sheath tube 15. A heater front end part 14S of the heater member 14 protrudes out of the front end 13S of the cap member 13. Further, the heater member 14 is arranged in the axial hole 11H of the housing 11, specifically, the axial hole 12H of the metal shell 12, the inside of the flange part 22F and the front end part 22S of the inner cylinder 22, and the axial hole 13H of the cap member 13 so that the heater member 14 is able to move relatively in the axial direction AX. The heater front end part 14S of the heater member 14 is exposed in the combustion chamber FC (see FIG. 1). Thereby, the heater member 14 changes its position along the axial direction AX in response to the change in the cylinder internal pressure. In response, this displacement is transferred to the sensor main body 24 fixed to the inner cylinder main body part 22M in the metal shell 12 via the transfer sleeve 21 jointed to the heater member 14. This allows the glow plug 10 to sense the cylinder internal pressure of the combustion chamber FC of the engine EG.

The center shaft 18 is shaped in a straight bar extending in the base end side AXB of the axial direction AX from the center shaft front end part 18S. A part of the front end side AXS including the center shaft front end part 18S of the center shaft 18 is inserted in the sheath tube 15 together with the control coil 16B and the heat coil 16A (see FIG. 2). The heater member 14 and the center shaft 18 are fixed to each other by the insulating powder 17 and thus integrated.

The membrane 26 is an elastic member shaped in a two-step cylinder extending along the axial direction AX. A front end part 26S has a smaller diameter and a base end part 26K has a larger diameter. As described before, the larger-diameter base end part 26K is welded at its entire circumference to the housing 11 (the front end part 22S of the inner cylinder 22) in an airtight manner. On the other hand, the smaller-diameter front end part 26S is welded at its entire circumference to the sheath tube 15 in the front end side AXS of the front end part 21S of the transfer sleeve 21 in an airtight manner. Thereby, the heater member 14 is connected to the housing 11 (the front end part 22S of the inner cylinder 22) in an elastic manner via the membrane 26, and thus the displacement along the axial direction AX is permitted in the heater member 14. That is, the membrane 26 connects the heater member 14 to the housing 11 so that the heater member 14 is able to move relatively along the axial direction AX in an elastic manner. Further, as described later, the displacement of the heater member 14 along the axial direction AX is transferred to the sensor main body 24 by the transfer sleeve 21 integrated with the heater member 14.

In addition, the membrane 26 blocks the axial hole 11 H of the housing 11 from the heater member 14 in an airtight manner with respect to the axial direction AX. As described before, the communication gap CV communicating to the combustion chamber FC is formed inside the cap member 13, and the membrane 26 faces the communication gap CV. Therefore, when the combustion gas generated in the combustion chamber FC enters the communication gap CV in the housing 11, the membrane 26 comes into contact with the combustion gas. However, the membrane 26 prevents the combustion gas from entering the base end side AXB of the membrane 26.

Further, a cylindrical terminal cover 28C is welded to the metal shell base end part 12K of the metal shell 12. The terminal assembly 28 is accommodated in the terminal cover 28C. A part of the terminal assembly 28 protrudes in the base end side AXB of the terminal cover 28C. In the terminal assembly 28, an output terminal part and a wiring, which are not shown, for outputting the signal outputted from the sensor main body 24 to the external circuit are provided, though their details are not provided here. Further, an external connection terminal (not shown) electrically conducted to the heater member 14 (the control coil 16B, the heat coil 16A) via the above-described center shaft 18 is also arranged inside the terminal assembly 28.

Turning back to FIG. 1, the glow plug 10 (the heater member 14) is electrically connected to the ECU 1 as the glow plug current conduction control apparatus and to the glow controller 5. The current conduction from a battery BT by the glow controller 5 is controlled to cause the heater member 14 to heat.

In addition, as described before, the glow plug 10 is able to sense the cylinder internal pressure of the combustion chamber FC. Therefore, the signal corresponding to the cylinder internal pressure is transmitted to the ECU 1 via the glow controller 5. Based on the signal corresponding to the cylinder internal pressure, the ECU 1 is able to know the combustion state in the combustion chamber FC, that is, to estimate the ignition timing and the combustion temperature, further detect a knock, detect the peak position of the cylinder internal pressure, and detect misfire, and so on. As such, the glow plug 10 has the pressure sensing function for detecting the cylinder internal pressure.

The glow controller 5 is connected to the glow plug 10. The glow controller 5 is connected also to the battery BT and the ECU 1. In response to the ON-OFF driving signal and the pulse modulation signal (PWM signal) generated from the ECU 1, the glow controller 5 switches the current conduction from the battery BT to the glow plug 10 (the heater member 14).

Furthermore, various sensors for the vehicle control besides the above-described respective sensors are provided to the vehicle (not shown) that runs by using the engine EG. For example, an accelerator pedal AC is provided with an accelerator opening sensor 72 adapted to output an accelerator opening signal according to the state (the amount of displacement) of the accelerator pedal AC. There is also an engine revolution sensor 75 adapted to output an engine revolution signal corresponding to the engine revolution of the engine EG (the crank shaft).

The ECU 1 has a microprocessor, a RAM, and ROM therein, which are not shown. The microprocessor utilizes the RAM and the ROM to monitor the output of each sensor and further operate various actuators such as the injector IJ and the like. Thereby, the microprocessor performs various controls for the engine EG in an optimum manner depending on the current situations. Further, the ECU 1 performs the process of controlling the current conduction to the glow plug 10. Specifically, around the time of the starting of the engine EG, a starting time current conduction control for conducting a current to the heater member 14 of the glow plug 10 is performed via the glow controller 5. This causes a rise in the temperature of the heater member 14 (the heat coil 16A and the control coil 16B). That is, by performing the starting time current conduction control to raise the temperature of the heater member 14, the ECU 1 causes the temperature in the combustion chamber to rise or causes the temperature of the heater member 14 to be high. This results in a rapid rise in the temperature of the collided fuel, which allows for the improvement of the ignition property of the fuel and the engine start stability.

By the way, in response that the fuel FL is combusted in the combustion chamber FC by the operation of the engine EG, soot may be generated or exhausted in the exhaust gas EF depending on the driving state. Further, together with the generation of the soot, unburned fuel (HC) may remain and be exhausted. Here, the glow hole GH of the engine head EH communicates with the combustion chamber FC. Thus, the soot, fine particles in which the unburned fuel is attached to the soot, and the like would pass through the gap between the glow hole GH and the heater member 14 of the glow plug 10 and, as a result, the soot and the fine particles would be attached or accumulated as the deposit inside the axial hole 11H of the housing 11. In particular, the soot may enter the deeper through the communication gap CV between the housing 11 and the heater member 14 and, as a result, would be attached to or accumulated on, as the deposit, the inner circumference surface of the axial hole 13H of the cap member 13, the outer circumference surface of the sheath tube 15 opposing to the axial hole 13H, and the front end side surface 26F of the membrane 26, so that the communication gap CV would be closed. In this case, the displacement of the heater member 14 caused by the change in the cylinder internal pressure is unlikely to occur. As a result, the cylinder internal pressure detected by the sensor main body 24 would decrease compared to the case where no deposit is attached.

In the present embodiment, however, when the engine EG is in the driving state where the deposit is accumulated in the axial hole 11H of the housing 11 due to the generated soot in the exhaust gas EF, the ECU 1 performs a deposit accumulation time current conduction control for preventing the attachment of the deposit to the glow plug 10, in particular, in the communication gap CV, besides the starting time current conduction control. Specifically, the ECU 1 conducts a current to the heater member 14 to raise the temperature of the heater member 14. Of the heater member 14, not only the front end portion protruding into the combustion chamber FC, but also the portion facing the communication gap CV and further the membrane 26 are heated. Thereby, the deposit accumulation time current conduction control is implemented so that the temperature of the membrane 26 rises to 200 degrees centigrade or higher. It is noted that the driving state of the engine EG so that the deposit is accumulated in the axial hole 11 H of the housing 11 due to the soot generated in the exhaust gas EF includes the driving state where the engine EG is driven so that the oxidation catalyst CT and the diesel particle filter DF re-activate. Further, it includes the driving state when the engine EG is driven in the state where the supply amount of the fuel FL from the injector IJ is the maximum due to the driving under a heavy load with the maximum opening of the accelerator pedal AC in the case where the vehicle climbs a long slope and the like.

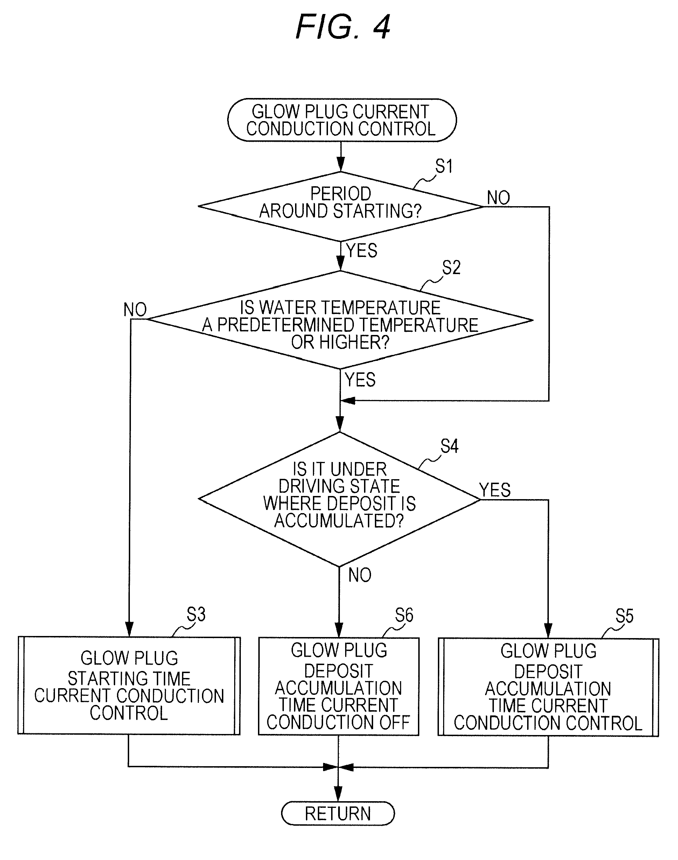

In the followings, the current conduction control process of the glow plug 10 by the ECU 1 and the glow controller 5 will be described by referring to the flowchart of FIG. 4. Firstly, the ignition switch (not shown) is turned on and thereby the ECU 1 and the glow controller 5 start operation. In response, the current conduction control of the glow plug 10 is started. Firstly, at step S1, it is determined whether or not it is the period around the starting of the engine EG. If it is the period around the starting, step S2 is entered. On the other hand, if the engine EG has already started and the period around the starting has elapsed (No), step S4 is entered.

At step S2, it is determined whether or not the water temperature of the cooling water flowing in the cooling water path WJ that is obtained from the water temperature sensor 73 is a predetermined temperature or higher (30 degrees centigrade or higher in the present embodiment). If the water temperature is low (No), step S3 is entered. In this case, the engine EG has not been warmed and therefore the current conduction to the glow plug 10 is necessary for the ignition assist at the starting, the ignition stabilization after the starting, and so on.

At step S3, the current conduction is applied in a predetermined pattern to the heater member 14 of the glow plug 10. The heater member 14 is heated to assist the ignition of the engine EG before the starting of the engine EG and assist the driving after the starting by the after-glow. On the other hand, if the water temperature is the predetermined temperature or higher (Yes), step S4 is entered. For example, when not much time has elapsed from the previous driving, the engine EG has been warmed and therefore the ignition assist at the starting and the like by the glow plug 10 are considered to be unnecessary.

At step S4, it is determined whether or not the driving state of the engine EG is the state where the deposit is accumulated in the axial hole 11H of the housing 11. Specifically, it is determined whether or not it is in the driving state where so much soot is generated that causes the deposit due to the soot to be accumulated in the communication gap CV between the housing 11 and the heater member 14 of the glow plug 10 mounted to the engine EG. An example of such a driving state of the engine EG may be the case of heavy load and low engine revolution. It is noted that, in this determination, reference can be made to the signal of a depression amount of the accelerator pedal AC, that is, the accelerator opening from the accelerator opening sensor 72, the signal of the engine revolution of the engine EG from the engine revolution sensor 75, an A/F signal from an A/F sensor 74 mounted to an exhaust pipe EX (see FIG. 1), and so on.

At step S4, if the driving state of the engine EG is determined to be the state where the deposit is accumulated in the axial hole 11H (Yes), step S5 is entered. Here, the deposit accumulation time current conduction control is applied to the glow plug 10. That is, the heater member 14 is heated by conducting the current to the heater member 14 of the glow plug 10 so that the temperature of the membrane 26 is higher than or equal to 200 degrees centigrade by the heat transferred from the heater member 14 and the like. Specifically, the correlation between the application voltage to the glow plug and the temperature of the membrane 26 is obtained in advance. The duty ratio control is used to properly set the effective application voltage to the glow plug so that the temperature of the membrane 26 becomes a predetermined temperature higher than or equal to 200 degrees centigrade based on the obtained data.

On the other hand, at step S4, if the driving state of the engine EG is not determined to be the state where the deposit is accumulated in the axial hole 11H due to the reduction of the load on the engine EG (No), step S6 is entered. At step S6, the current conduction (the deposit accumulation time current conduction control) to the glow plug 10 is stopped. It is noted that, during the ignition switch being turned on, steps S1 to S6 are repeatedly executed for a predetermined period in the processor of the ECU 1 by the interruption process. In the above-described flowchart, the microprocessor of the ECU 1 which executes step S3 corresponds to the starting time current conduction means and the microprocessor of the ECU 1 which executes step S5 corresponds to the deposit accumulation time current conduction means.

Next, described will be the study regarding the temperature of the membrane 26 and the study regarding the sensitivity change of the pressure sensing function of the glow plug 10 due to the soot.

Firstly, the theoretical measurement method of the pressure sensitivity regarding the pressure sensing function (the pressure sensor) of the glow plug 10 will be described. An airtight container is prepared that is connected to a gas cylinder of the compressed air via the regulator and has a variable internal pressure. With the internal pressure of the airtight container set to the atmospheric pressure, the front end portion of the glow plug 10 is inserted and fixed to the inside of the airtight container. The valve connected to the regulator of the gas cylinder of the compressed air is opened and shut to change the pressure inside the container between the atmospheric pressure and the atmospheric pressure plus 2 MPa in a pulse manner. The output from the pressure sensor of the glow plug 10 during this operation is sensed. Thereby, the pressure sensitivity of the glow plug 10 to the change of the pressure (the cylinder internal pressure) of 2 MPa can be obtained.

Subsequently, while the driving conditions of the engine EG mounted to the glow plug 10 are maintained, the current conduction of the glow plug mounted to each cylinder is turned off or on. Furthermore, in the case where the current conduction is turned on, the different application voltages (the duty ratios) are applied to a plurality of current-conducted glow plugs. In this way, the engine EG is driven so that the temperatures of membranes 26 of the current-conducted glow plugs are of different values to each other. The pressure sensitivity change of the glow plug before and after the driving in this case was studied by the theoretical measurement of the pressure sensitivity. Specifically, firstly, as glow plugs for the study, prepared are four glow plugs in each of which a thermocouple is adhered on the base end side surface of the membrane 26 and alteration is made so that the lead wires of the thermocouple can be taken out from the base end side. They are mounted to the common-rail fuel injection type diesel engine EG of 2000 cc having four cylinders. This engine EG is driven for 20 hours under the driving condition where the soot is likely to be generated in the combustion chamber FC. The current conduction is turned off for one of the four glow plugs which is mounted to the first cylinder. The current conduction is turned on for the remaining three glow plugs mounted to the second, third, and fourth cylinders. The application voltages were adjusted so that the respective temperatures of the membranes 26 of these three glow plugs are predetermined temperatures (see Table 1). The above-described theoretical measurement of the pressure sensitivity was applied to each glow plug before the driving and after the driving to study the pressure sensitivity change of each glow plug for the sensitivities before and after the driving. Table 1 represents the presence or absence of the current conduction to each glow plug, the temperature of the membrane 26, and the study result of the pressure sensitivity change.

**[Table 1]**

| Engine cylinder | First cylinder | Second cylinder | Third cylinder | Fourth cylinder |
|---|---|---|---|---|
| Current conduction to glow plug | OFF | ON | ON | ON |
| Membrane temperature (°C) | 150 | 230 | 250 | 350 |
| Sensitivity before driving (mV/Mpa) | 178.5 | 178.5 | 178.5 | 178.5 |
| Sensitivity after driving (mV/Mpa) | 74.6 | 149.9 | 174.7 | 174.5 |
| Sensitivity degeneration (%) | -58.2 | -16.0 | -2.1 | -2.2 |

Engine used: four cylinders, 2000 cc, common-rail diesel engine
Driving time: 20 hours

According to Table 1, the temperature of the membrane 26 of the glow plug mounted to the first cylinder was 150 degrees centigrade that is lower than 200 degrees centigrade because of the absence of the current conduction to the glow plug. It can be seen that, in the first cylinder, the sensitivity of the pressure sensor after the driving is significantly reduced by -58.2% compared to that before the driving. Further, the temperature of the membrane 26 of the glow plug mounted to the second cylinder was 230 degrees centigrade that is lower than 250 degrees centigrade by the current conduction to the glow plug. In the second cylinder, the sensitivity of the pressure sensor after the driving is reduced by -16% compared to that before the driving. On the other hand, the temperature of respective membranes 26 of the glow plugs mounted to the third and fourth cylinders were 250 degrees centigrade and 350 degrees centigrade by the current conduction to the glow plug. It can be seen that, in the third and fourth cylinders, the sensitivity of the pressure sensor is not substantially reduced (by around -2%).

The soot generated in the combustion chamber FC during the driving of the engine EG passes through the gap between the glow hole GH of the engine head EH and the heater member 14 of the glow plug 10 and further enters the deeper through the communication gap CV between the housing 11 and the heater member 14 of the glow plug 10. In the state where the temperature of the membrane 26 is lower than 200 degrees centigrade (the first cylinder), the deposit is attached or accumulated on the inner circumference surface of the axial hole 13H of the cap member 13, the outer circumference surface of the sheath tube 15 opposing to the axial hole 13H, and the front end side surface 26F of the membrane 26. Therefore, it is considered that the communication gap CV is closed and thus the displacement of the heater member 14 due to the change in the cylinder internal pressure is unlikely to occur, so that the pressure sensitivity of the glow plug is significantly reduced.

In contrast, it can be seen that, with the temperature of the membrane 26 being higher than or equal to 200 degrees centigrade (the second, third, and fourth cylinders), the reduction in the sensitivity of the pressure sensor can be suppressed even in the driving state where the soot is generated. Furthermore, with the temperature of the membrane 26 being higher than or equal to 250 degrees centigrade (the third and fourth cylinders), the reduction in the sensitivity of the pressure sensor can be sufficiently suppressed.

Although the present invention has been described above based on the embodiment, the present invention is not limited to the above-described embodiment. The present invention is of course applicable when the embodiment is properly modified in the scope not departing from its spirit.

For example, the "glow plug current conduction control apparatus" in which the ECU 1 is used to determine the control details of the current conduction by the glow controller 5 has been illustrated in the embodiment. However, the glow controller 5 may be configured to autonomously apply the current conduction control to the glow plug 10 according to the notification from the ECU 1. In this case, the ECU 1 utilizes various sensors to sense whether or not it is in the state where the deposit is accumulated in the axial hole 11H of the housing 11 due to the generated soot, and notifies the glow controller 5 of the result thereof. In this case, the glow controller 5 corresponds to the "glow plug current conduction control apparatus".
The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A glow plug control apparatus (1, 5) adapted to perform a current conduction control of a glow plug (10) having a pressure sensing function for detecting a cylinder internal pressure of an internal combustion engine (EG),
wherein the glow plug (10) has:
a cylindrical housing (11, 12, 13, 22F, 22S) having an axial hole (11H) extending in an axial direction (AX);
a straight bar-shaped heater member (14) whose at least front end part (14S) protrudes out of an front end (13S) of the housing (11), the heater member having an annular gap (CV) between the heater member and the housing (11), arranged in the axial hole (11H) so as to be able to move relatively with respect to the housing (11) in the axial direction (AX), and adapted to heat by a current conduction; and
a seal member (26) arranged in the axial hole (11H) of the housing (11), adapted to connect the heater member (14) to the housing (11) in a relatively movable manner in the axial direction (AX) and in an elastic manner, and adapted to prevent, in an airtight manner, an entry of a combustion gas generated in an combustion chamber of the internal combustion engine (EG) into the gap (CV) between the housing (11) and the heater member (14) toward an rear end side in the axial direction,
the glow plug control apparatus (1, 5) including:
starting time current conduction means (S3) for conducting a current to the heater member (14) of the glow plug (10) around a time of a starting of the internal combustion engine (EG); and
deposit accumulation time current conduction means (S5) for conducting a current to the heater member (14) of the glow plug (10) so that the seal member (26) is heated to higher than or equal to 200 degrees centigrade at time in a driving state where deposit is accumulated in the axial hole of the housing other than around the time of the starting.

2. The glow plug control apparatus (1, 5) according to claim 1, wherein the deposit accumulation time current conduction means (S5) conducts a current to the heater member (14) of the glow plug (10) so that the seal member (26) is heated to higher than or equal to 250 degrees centigrade.

3. The glow plug control apparatus (1, 5) according to claim 1 or 2, wherein the driving state where deposit is accumulated in the axial hole (11H) includes
a driving state where the internal combustion engine (EG) is driven so that an exhaust gas cleaning catalyst or a diesel particle filter is re-activated, or
a driving state where the internal combustion engine (EG) is driven with a maximum fuel supply amount.

4. A glow plug control method for performing a current conduction control of a glow plug (10) having a pressure sensing function for detecting a cylinder internal pressure of an internal combustion engine (EG),
wherein the glow plug (10) has:
a cylindrical housing (11, 12, 13, 22F, 22S) having an axial hole (11H) extending in an axial direction (AX);
a straight bar-shaped heater member (14) whose at least front end part (14S) protrudes out of an front end (13S) of the housing (11), the heater member having an annular gap (CV) between the heater member and the housing (11), arranged in the axial hole (11H) so as to be able move relatively with respect to the housing (11) in the axial direction (AX), and adapted to heat by a current conduction; and
a seal member (26) arranged in the axial hole (11H) of the housing (11), adapted to connect the heater member (14) to the housing (11) in a relatively movable manner in the axial direction (AX) and in an elastic manner, and adapted to prevent, in an airtight manner, an entry of a combustion gas generated in an combustion chamber of the internal combustion engine (EG) into the gap (CV) between the housing (11) and the heater member (14) toward an rear end side in the axial direction,
the glow plug control method includes: a starting time current conduction step (S3) for conducting a current to the heater member (14) of the glow plug (10) around a time of a starting of the internal combustion engine (EG); and a deposit accumulation time current conduction step (S5) for conducting a current to the heater member (14) of the glow plug (10) so that the seal member (26) is heated to higher than or equal to 200 degrees centigrade at time in a driving state where deposit is accumulated in the axial hole (11H) of the housing (11) other than the time around the starting.

5. The glow plug control method according to claim 3 or 4, wherein the deposit accumulation time current conduction step (S5) conducts a current to the heater member (14) of the glow plug (10) so that the seal member (26) is heated to higher than or equal to 250 degrees centigrade.

6. The glow plug control method according to claim 4 or 5, wherein the driving state where deposit is accumulated in the axial hole (11H) includes
a driving state where the internal combustion engine (EG) is driven so that an exhaust gas cleaning catalyst or a diesel particle filter is re-activated, or
a driving state where the internal combustion engine (EG) is driven with a maximum fuel supply amount.
